# FASCICULE DE BREVET EUROPEEN

(11) **EP 3 143 390 B1**
(45) Date de publication et mention de la délivrance du brevet: **26.07.2023**
(21) Numéro de dépôt: 15724346.0
(22) Date de dépôt: 07.05.2015
(51) Int. Cl.: G01N 27/90

(54) **PROCÉDÉ DE FABRICATION D'UNE TÊTE DE CONTRÔLE D'UN CAPTEUR DE CONTRÔLE NON DESTRUCTIF À COURANTS DE FOUCAULT**
VERFAHREN ZUR HERSTELLUNG EINES PRÜFKOPFES EINES ZERSTÖRUNGSFREIEN WIRBELSTROMPRÜFSENSORS
METHOD FOR MANUFACTURING A INSPECTION HEAD OF AN EDDY CURRENT NON-DESTRUCTIVE TESTING SENSOR

(30) Priorité: 16.05.2014 FR 1454411
(43) Date de publication de la demande: 22.03.2017
(73) Titulaire: Commissariat à l'Énergie Atomique et aux Énergies Alternatives, 75015 Paris (FR)
(72) Inventeur: DELABRE, Benjamin, 45480 Andonville (FR); DECITRE, Jean-Marc, 91460 Marcoussis (FR)
(74) Mandataire: Bonnet, Michel
(86) Numéro de dépôt international: PCT/FR2015/051219
(87) Numéro de publication internationale: WO 2015/173497

(56) Documents cités:
- WO-A1-2013/093278
- DE-A1- 3 120 522
- FR-A1- 2 689 637
- FR-A1- 2 985 027
- US-A- 3 693 075
- US-A- 5 541 510
- US-A1- 2005 017 713
- US-A1- 2009 079 424
- US-A1- 2009 079 424
- US-A1- 2010 134 100
- US-A1- 2010 139 081
- MUKHOPADHYAY S C ED - INSTITUTE OF ELECTRICAL AND ELECTRONICS ENGINEERS: "Neural network aided estimation of near-surface material properties using planar type micromagnetic sensors", PROCEEDINGS OF IEEE SENSORS 2002. ORLANDO, FL, JUNE 12 - 14, 2002; [IEEE INTERNATIONAL CONFERENCE ON SENSORS], NEW YORK, NY : IEEE, US, vol. 2, 12 juin 2002 (2002-06-12), pages 747-752, XP010605198, DOI: 10.1109/ICSENS.2002.1037199 ISBN: 978-0-7803-7454-6
- MUKHOPADHYAY S C ED - INSTITUTE OF ELECTRICAL AND ELECTRONICS ENGINEERS: "Neural network aided estimation of near-surface material properties using planar type micromagnetic sensors", PROCEEDINGS OF IEEE SENSORS 2002. ORLANDO, FL, JUNE 12 - 14, 2002; [IEEE INTERNATIONAL CONFERENCE ON SENSORS], NEW YORK, NY : IEEE, US, vol. 2, 12 June 2002 (2002-06-12), pages 747-752, XP010605198, DOI: 10.1109/ICSENS.2002.1037199 ISBN: 978-0-7803-7454-6

## Description

La présente invention concerne un procédé de fabrication d'une tête de contrôle d'un capteur de contrôle non destructif à courants de Foucault.

Un capteur de contrôle non destructif de ce type utilise la propriété électromagnétique des courants de Foucault pour la détection de défauts tels que des entailles, fissures ou corrosions dans des structures conductrices de faible épaisseur, pas nécessairement planes, telles que des pièces métalliques aéronautiques ou nucléaires. Par exemple, cette technologie permet l'inspection de tubes de générateurs de vapeur dans des centrales nucléaires.

Une tête de contrôle d'un tel capteur comporte généralement au moins une bobine, dont au moins une bobine à fonction d'émission alimentée en courant alternatif et au moins une bobine à fonction de réception dans laquelle circule un courant induit et présentant alors une force électromotrice ou une impédance induite de même fréquence que celle du courant alternatif d'alimentation. On notera qu'une même bobine peut tout à fait être à fonction commune d'émission et de réception. Plus précisément, lorsque la tête de contrôle du capteur de contrôle non destructif à courants de Foucault est disposée au voisinage d'une pièce à inspecter, la bobine à fonction d'émission est alimentée en signal sinusoïdal. Un champ électromagnétique de même fréquence est alors émis dans l'air et dans la pièce à inspecter. Il en résulte, aux bornes de la bobine à fonction de réception, une force électromotrice induite ou une impédance induite provenant, d'une part, du couplage entre la bobine à fonction d'émission et la bobine à fonction de réception (ce couplage étant modifié en présence de la pièce) et, d'autre part, du champ magnétique rayonné par les courants induits dans la pièce et qui traduit l'éventuelle présence d'un défaut dans cette dernière.

Dans une configuration à fonctions d'émission et réception séparées, une tête de contrôle peut comporter une première bobine à fonction d'émission et une deuxième bobine à fonction de réception. En mode différentiel de réception, une tête de contrôle de cette configuration peut comporter une première bobine à fonction d'émission et deux autres bobines à fonction de réception montées en différentiel. En mode différentiel d'émission, une tête de contrôle de cette configuration peut comporter deux bobines à fonction d'émission montées en différentiel et une troisième bobine à fonction de réception. Dans tous les cas, la force électromotrice induite ou l'impédance peut être mesurée dans la ou les bobines à fonction de réception à l'aide d'un dispositif adapté. Souvent, il est constaté qu'une configuration à fonctions d'émission et réception séparées permet de réduire fortement les perturbations dues au phénomène d'entrefer.

Dans une autre configuration à fonctions d'émission et réception communes, une tête de contrôle peut comporter une même bobine à fonction simultanée d'émission et de réception ou deux bobines à fonction simultanée d'émission et de réception. En mode différentiel de réception ou d'émission, les deux bobines concernées peuvent être montées en différentiel, par exemple dans un circuit en pont de Wheatstone. Dans tous les cas, seule l'impédance induite peut être mesurée dans la ou les bobines à fonction commune d'émission et de réception à l'aide d'un dispositif adapté, par exemple un analyseur d'impédance.

Par ailleurs, dans l'une ou l'autre des configurations précitées, un plus grand nombre de bobines peut être envisagé.

Dans tous les cas, la configuration géométrique des bobines peut être optimisée lors de la fabrication d'une tête de contrôle sur la base de certains critères de fonctionnement.

L'invention s'applique ainsi plus particulièrement à la fabrication de têtes de contrôle comportant au moins une bobine, dont au moins une bobine à fonction d'émission et au moins une bobine à fonction de réception, et concerne un procédé de fabrication comportant les étapes suivantes :
- optimisation d'une configuration géométrique de ladite au moins une bobine de la tête de contrôle sur la base d'au moins un critère prédéterminé, et
- fabrication de la tête de contrôle en respectant la configuration géométrique de ladite au moins une bobine réalisant cette optimisation.

Dans un certain nombre de publications, telles que les brevets FR 2 881 827 B1, FR 2 904 694 B1 et FR 2 985 027 B1, la configuration géométrique des bobines d'une tête de contrôle est optimisée sur la base de l'un ou de plusieurs des critères suivants éventuellement combinés :
- minimisation d'une force électromotrice induite dans au moins une bobine à fonction de réception lorsque la tête de contrôle est à une distance nominale prédéterminée d'une pièce à inspecter sans défaut, cette force électromotrice induite étant dans cette situation qualifiée de couplage direct,
- maximisation d'une variation de la force électromotrice induite lorsque cette variation est due à la présence d'un défaut à détecter dans la pièce à inspecter, et
- optimisation d'une autre variation de la force électromotrice induite lorsque cette autre variation est due à une variation de distance entre la tête de contrôle et la pièce à inspecter, c'est-à-dire à une variation d'entrefer.

Mais la pièce à inspecter, outre les défauts qu'elle peut comporter et les variations d'entrefer qui peuvent affecter son contrôle, peut aussi présenter une inhomogénéité de conductivité électrique et/ou de perméabilité magnétique qu'il pourrait être intéressant de prendre en compte, voire d'évaluer. Or aucun des documents précités n'évoque ni ne traite ce problème. Par ailleurs, d'autres documents évoquent ce problème mais le traitent en proposant des solutions complexes de sorte qu'il reste à ce jour difficile d'estimer simplement la conductivité électrique ou la perméabilité magnétique d'un matériau.

Ainsi par exemple, le brevet DE 31 20 522 C2 porte sur une tête de contrôle d'un capteur de contrôle non destructif à courants de Foucault, comprenant une seule bobine à fonctions d'émission et réception communes, et divulgue l'utilisation d'un abaque dans le plan complexe de mesure d'impédance pour différentes fréquences, dans le but d'estimer les propriétés électromagnétiques d'une pièce à inspecter. Mais les courbes non linéaires obtenues ne permettent pas d'estimer correctement la conductivité électrique ou la perméabilité magnétique en raison de nombreux paramètres d'influence qui induisent des incertitudes.

D'autres méthodes tout aussi complexes sont divulguées dans les demandes de brevets US 2005/0017713 A1 et US 2007/0114993 A1. Elles tentent d'estimer les propriétés électromagnétiques d'une pièce à inspecter tout en étant aptes à détecter conjointement des défauts éventuels dans cette pièce, mais n'y parviennent que partiellement. En particulier, le document US 2005/0017713 A1 est basé sur une corrélation entre la baisse de conductivité électrique de la pièce (en l'occurrence une soudure) et la présence d'un défaut alors que la conductivité électrique peut évoluer indépendamment de la présence d'un éventuel défaut et que l'on peut vouloir mesurer ou détecter les deux indépendamment. US 2009/079424 A1 divulgue un procédé d'optimisation d'une tête de contrôle non destructive, mais différents critères de conception sont utilisés.

Il peut ainsi être souhaité de prévoir un procédé de fabrication d'une tête de contrôle d'un capteur de contrôle non destructif à courants de Foucault qui permette de s'affranchir d'au moins une partie des problèmes et contraintes précités.

L'invention a donc pour objet un procédé de fabrication d'une tête de contrôle d'un capteur de contrôle non destructif à courants de Foucault, cette tête de contrôle comportant au moins une bobine dont au moins une bobine à fonction d'émission et au moins une bobine à fonction de réception, comportant les étapes suivantes :
- optimisation d'une configuration géométrique de ladite au moins une bobine de la tête de contrôle sur la base d'au moins un critère d'optimisation prédétermine,
- fabrication de la tête de contrôle en respectant la configuration géométrique de ladite au moins une bobine réalisant cette optimisation,
dans lequel l'optimisation de la configuration géométrique de ladite au moins une bobine est réalisée au moins sur un critère d'optimisation du respect d'une relation de proportionnalité entre une variation de la partie imaginaire d'une grandeur électrique complexe induite dans ladite au moins une bobine à fonction de réception et une variation de la partie réelle de cette grandeur électrique complexe, lorsque ces variations, formant une variation complexe de ladite grandeur électrique induite, sont dues à une variation de conductivité électrique et/ou de perméabilité magnétique d'une pièce à inspecter.

Ainsi, l'optimisation de la configuration géométrique des bobines peut être réalisée spécifiquement en prenant en compte des variations possibles de conductivité électrique et/ou de perméabilité magnétique de la pièce à inspecter et en imposant que ces variations soient détectables, au moins sur une certaine plage de valeurs, par déplacement d'une grandeur électrique complexe mesurable dans une certaine direction prédéterminée d'un plan complexe de représentation de cette grandeur électrique. On peut donc fabriquer de cette façon une tête de contrôle présentant une meilleure sensibilité aux propriétés électromagnétiques de la pièce à inspecter, cette sensibilité étant améliorée par les variations rectilignes de la grandeur mesurée. Le critère d'optimisation proposé n'étant en outre pas incompatible avec ceux proposés dans les brevets FR 2 881 827 B1, FR 2 904 694 B1 et FR 2 985 027 B1, on devient capable de fabriquer une tête de contrôle à sensibilités multiples.

De façon optionnelle, l'optimisation de la configuration géométrique de ladite au moins une bobine est en outre réalisée sur un critère de minimisation de la différence entre, d'une part, +/- π/2 et, d'autre part, le déphasage entre ladite variation complexe de la grandeur électrique due à ladite variation de conductivité électrique et/ou de perméabilité magnétique de la pièce à inspecter et une autre variation complexe de la même grandeur électrique due à la présence d'un défaut à détecter dans la pièce à inspecter et/ou à une variation de distance entre la tête de contrôle et la pièce à inspecter. Ainsi, on améliore la capacité de la tête de contrôle à distinguer, d'une part, les variations de conductivité électrique et/ou de perméabilité magnétique et, d'autre part, les variations d'entrefer et/ou la présence d'un défaut.

De façon optionnelle également, la grandeur électrique complexe induite est une force électromotrice ou une impédance.

De façon optionnelle également, la tête de contrôle comporte au moins deux bobines et l'optimisation de la configuration géométrique de ces bobines comporte l'optimisation d'une disposition relative de ces bobines, telle que par exemple une distance entre leurs axes.

De façon optionnelle également, l'optimisation de la configuration géométrique de ladite au moins une bobine comporte l'optimisation de dimensions géométriques de chaque bobine.

De façon optionnelle également, la configuration géométrique de ladite au moins une bobine de la tête de contrôle est préalablement initialisée en imposant au moins l'un des éléments de l'ensemble constitué d'un nombre de bobines, d'une attribution de fonction d'émission et/ou de réception pour chaque bobine et de la coaxialité de toutes les bobines en cas de pluralité de bobines. En particulier, si la coaxialité des bobines est imposée, le capteur résultant sera isotrope.

De façon optionnelle également, la configuration géométrique de ladite au moins une bobine de la tête de contrôle est optimisée en faisant varier au moins l'un des éléments de l'ensemble constitué de la disposition relatives des bobines en cas de pluralité de bobines, des diamètres internes et externes de chaque bobine, de leur nombre de spires, de leur épaisseur, d'une distance nominale par rapport à la pièce à inspecter et de la fréquence électrique des courants circulant dans chaque bobine.

De façon optionnelle également, l'optimisation est réalisée sur la base :
- d'une simulation de la configuration géométrique de ladite au moins une bobine de la tête de contrôle permettant d'évaluer ladite grandeur électrique complexe induite et au moins sa variation complexe en fonction de la variation de conductivité électrique et/ou de perméabilité magnétique de la pièce à inspecter, et
- d'une optimisation, notamment une minimisation, multidimensionnelle non linéaire et non contrainte de type Nelder-Mead, appliquée sur le ou les critères d'optimisation.

De façon optionnelle également, la configuration géométrique de ladite au moins une bobine de la tête de contrôle est préalablement initialisée en imposant les contraintes suivantes :
- le nombre de bobines de la tête de contrôle est fixé à trois, dont une bobine d'émission et deux bobines de réception montées en mode différentiel,
- les trois bobines de la tête de contrôle sont annulaires et coaxiales,
- les deux bobines de réception de la tête de contrôle sont en outre coplanaires.

De façon optionnelle également, la configuration géométrique de ladite au moins une bobine de la tête de contrôle est préalablement initialisée en imposant les contraintes suivantes :
- le nombre de bobines de la tête de contrôle est fixé à deux, dont une bobine d'émission et une bobine de réception,
- ces deux bobines sont annulaires, non coplanaires et non coaxiales.

L'invention sera mieux comprise à l'aide de la description qui va suivre, donnée uniquement à titre d'exemple et faite en se référant aux dessins annexés dans lesquels :
- la figure 1 illustre les étapes successives d'un procédé de fabrication d'une tête de contrôle d'un capteur de contrôle non destructif à courants de Foucault selon un mode de réalisation de l'invention, sur la base d'une configuration de tête de contrôle à une bobine d'émission et une bobine de réception,
- les figures 2 et 3 sont des diagrammes illustrant, dans un plan complexe normalisé, l'influence de paramètres de configuration de bobines sur la vérification d'un critère d'optimisation du procédé de la figure 1,
- la figure 4 est un diagramme illustrant, dans un plan complexe normalisé, la détectabilité de défauts à l'aide d'une tête de contrôle optimisée par exécution du procédé de la figure 1,
- la figure 5 est un diagramme illustrant, dans un plan complexe normalisé, la détectabilité de variations d'entrefer à l'aide d'une tête de contrôle optimisée par exécution du procédé de la figure 1,
- les figures 6 et 7 sont des diagrammes illustrant, dans un plan complexe normalisé, des résultats expérimentaux d'optimisation obtenus par exécution du procédé de fabrication de la figure 1,
- la figure 8 illustre le résultat de l'exécution du procédé de fabrication de la figure 1, sur la base d'une configuration de tête de contrôle à une bobine d'émission et deux bobines de réception en mode différentiel,
- la figure 9 illustre schématiquement le principe de conception, grâce à l'exécution du procédé de fabrication de la figure 1, d'une tête de contrôle multi-éléments matricielle.

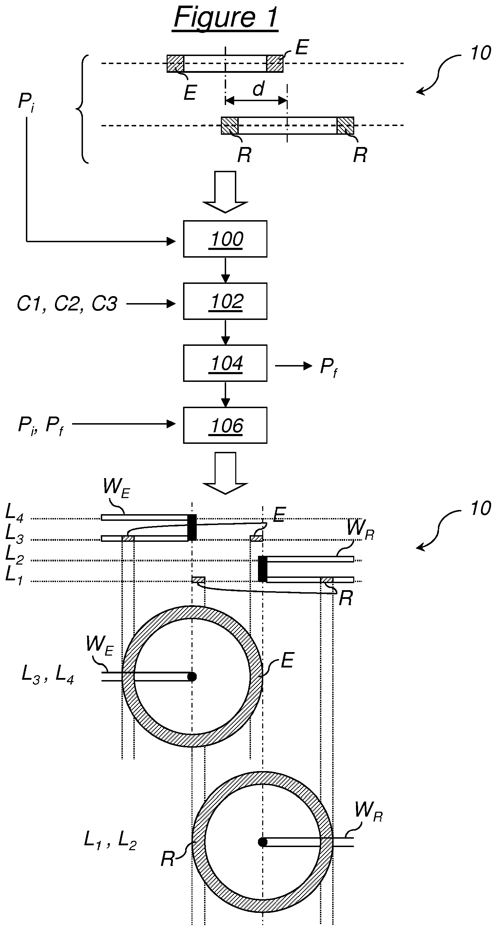

A titre purement illustratif, le procédé de fabrication de la figure 1 est présenté pour la conception particulière d'une tête de contrôle 10 à deux bobines non coaxiales, dont une bobine à fonction d'émission et une bobine à fonction de réception. Mais comme cela sera vu par la suite, ce procédé peut s'appliquer à bien d'autres configurations de têtes de contrôle.

Au cours d'une première étape d'initialisation 100, certains paramètres Pᵢ de la configuration géométrique des bobines de la tête de contrôle 10 sont imposés. Dans l'exemple de la figure 1 précité :
- le nombre de bobines de la tête de contrôle 10 souhaitée est fixé à deux, dont une bobine d'émission E et une bobine de réception R,
- ces deux bobines E et R sont annulaires et disposées sur des plans différents parallèles.

D'une façon générale, la configuration géométrique des bobines de la tête de contrôle 10 est préalablement initialisée au cours de cette étape en imposant un nombre de bobines, une attribution de fonction d'émission et/ou de réception pour chaque bobine, une éventuelle coaxialité de bobines ou d'autres paramètres contraignants selon l'application visée ou le cas souhaité. C'est de cette façon qu'un grand nombre de configurations de têtes de contrôle peut être envisagé.

Ensuite, au cours d'une étape d'optimisation 102, sur la base des paramètres Pᵢ imposés à l'étape d'initialisation 100, d'autres paramètres P_{f}, dits finaux, permettant une fabrication concrète de la tête de contrôle 10, sont initialisés et modifiés dans le cadre d'une optimisation multidimensionnelle et à critères éventuellement multiples de la configuration géométrique des bobines de la tête de contrôle 10.

Ces paramètres finaux P_{f} comportent notamment au moins des paramètres de dimensions géométriques de chacune des bobines définies à l'étape d'initialisation 100, mais également des paramètres de dispositions relatives de ces bobines. Ils comportent donc par exemple, lorsque les bobines sont annulaires, les valeurs des diamètres internes et externes de chaque bobine, les valeurs de leurs épaisseurs respectives et une ou plusieurs valeurs de distances entre axes de bobines (par exemple la distance d séparant les axes des bobines E et R dans l'exemple illustré sur la figure 1). Les paramètres finaux peuvent en outre comporter le nombre de spires dans chaque bobine, ou la valeur de la distance nominale entre la tête de contrôle 10 et la pièce à inspecter, lorsqu'une couche protectrice et isolante doit être prévue entre les bobines de la tête de contrôle et la surface de la pièce à inspecter contre laquelle cette couche protectrice et isolante est destinée à être mise en contact. Ils peuvent aussi comporter la valeur de la fréquence électrique des courants circulant dans les bobines, bien que celle-ci puisse être en variante imposée à l'initialisation 100.

Certains des paramètres finaux peuvent être liés entre eux. Par exemple, lorsque deux bobines sont imposées *a priori* comme coplanaires à l'initialisation 100, elles ne peuvent pas se chevaucher et le diamètre externe de la plus petite de ces deux bobines est nécessairement inférieur au diamètre interne de l'autre. D'autres paramètres peuvent avoir une plage de variation limitée, tels que les nombres de spires.

Dans l'exemple de la figure 1, les critères sur lesquels est réalisée l'optimisation multidimensionnelle de la configuration géométrique des bobines comportent un premier critère noté C1 d'optimisation du respect d'une relation de proportionnalité entre une variation de la partie imaginaire d'une grandeur électrique complexe induite dans la bobine R à fonction de réception et une variation de la partie réelle de cette grandeur électrique complexe, lorsque ces variations, formant une variation complexe de la grandeur électrique induite, sont dues à une variation de conductivité électrique et/ou de perméabilité magnétique d'une pièce à inspecter. Ce critère C1 peut être qualifié de critère de maximisation de la sensibilité de la tête de contrôle 10 aux propriétés électromagnétiques de la pièce à inspecter. Il permet de viser à maintenir une relation quasi affine entre les parties réelle et imaginaire de la grandeur électrique induite lorsque la conductivité électrique et/ou la perméabilité magnétique varie, ce qui améliore la possibilité de déterminer cette conductivité électrique et/ou cette perméabilité magnétique.

Etant donné que la tête de contrôle 10 illustrée sur la figure 1 est à fonctions séparées d'émission et réception, la grandeur électrique complexe induite mesurable dans la bobine R est soit une force électromotrice, soit une transimpédance, en fonction de l'appareil de mesure dont on dispose. Lorsque l'on a ce choix, il est en général plus avantageux de mesurer la force électromotrice compte tenu de la simplicité des appareils de mesure dont on peut disposer. On peut notamment utiliser un appareil de détection synchrone qui permet d'obtenir simplement les parties réelle et imaginaire de la force électromotrice.

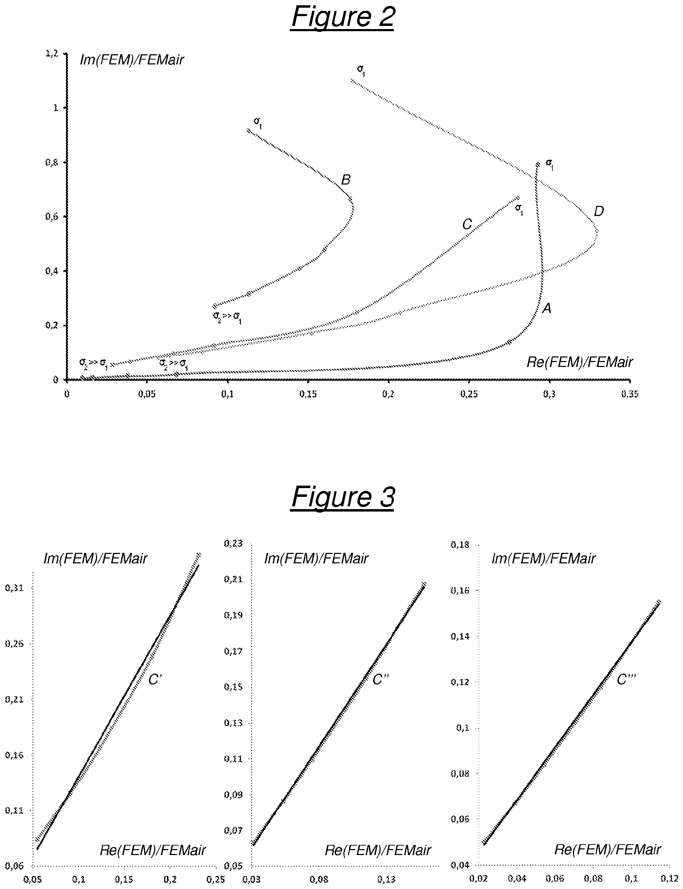

Une première illustration de l'optimisation du critère C1 est donnée par la figure 2 dans laquelle un diagramme représente, dans un plan complexe normalisé, différentes courbes de variations possibles de la force électromotrice induite FEM aux bornes de la bobine R de réception de la tête de contrôle 10 en fonction de variations de la conductivité électrique de la pièce à inspecter, pour une fréquence électrique des courants circulant dans les bobines E et R de 200 kHz. L'axe des abscisses donne la valeur mesurée aux bornes de la bobine R de la partie réelle de la force électromotrice induite FEM, notée Re(FEM), normalisée par une valeur de référence FEMair obtenue en l'absence de pièce à inspecter, c'est-à-dire à vide. Il est connu qu'une telle valeur de référence FEMair est scalaire (purement imaginaire) et peut donc aisément servir de valeur de normalisation, à la fois pour la partie réelle de FEM et pour sa partie imaginaire. L'axe des ordonnées donne donc la valeur mesurée de la partie imaginaire de la force électromotrice induite FEM, notée Im(FEM), normalisée par la même valeur de référence FEMair.

Quatre courbes A, B, C et D sont illustrées sur la figure 2, chaque courbe correspondant à une configuration géométrique particulière des bobines E et R. Chaque courbe illustre en outre les variations de la force électromotrice induite FEM en faisant varier la conductivité électrique σ de la zone inspectée, d'une valeur limite inférieure σ₁ à une valeur limite supérieure σ₂ » σ₁. Plus précisément, dans l'exemple illustré, σ₁ = 0,1 MS/m et σ₂ = 60 MS/m.

La courbe A correspond à une configuration selon laquelle les deux bobines E et R sont coaxiales (d = 0) et de diamètres internes et externes différents. La courbe B correspond à une configuration selon laquelle les deux bobines E et R sont coaxiales (d = 0) et de mêmes diamètres internes et externes. La courbe C correspond à une configuration selon laquelle les deux bobines E et R sont de mêmes diamètres internes et externes et décalées d'une distance d égale à la moitié de leur diamètre externe. Enfin, la courbe D correspond à une configuration selon laquelle les deux bobines E et R sont de mêmes diamètres internes et externes et décalées d'une distance d égale à leur diamètre externe.

La courbe C se distingue des autres en ce qu'elle vérifie le mieux le critère d'optimisation C1. Elle présente en effet une bonne linéarité sur une grande partie de la plage des valeurs de σ assurant ainsi une relation quasi affine entre les parties réelle et imaginaire de la force électromotrice. Notamment, on montre qu'elle ne perd sa linéarité que pour des valeurs de σ inférieures à 0,5 MS/m, alors que la plage maximale de conductivité des matériaux généralement utilisés en contrôle non destructif par courants de Foucault varie usuellement entre 0,6 MS/m (titane) et 20 MS/m (aluminium). Cette linéarité illustre la propriété selon laquelle une relation de proportionnalité est respectée entre toute variation de Im(FEM) et toute variation correspondante de Re(FEM), lorsque ces variations sont dues à une variation de conductivité électrique dans la plage de valeurs usuelles. La constante de proportionnalité est donnée par la pente de la portion de droite que forme la courbe C dans cette plage de valeurs. Cette linéarité est intéressante puisqu'elle permet, entre autres, d'estimer facilement les paramètres électromagnétiques du matériau.

Une deuxième illustration de l'optimisation du critère C1 est donnée par la figure 3 dans laquelle trois diagrammes représentent, dans le plan complexe normalisé et pour la configuration géométrique optimale de la courbe C, trois autres courbes de variations possibles de la force électromotrice induite FEM aux bornes de la bobine R de réception de la tête de contrôle 10 en fonction de variations de la conductivité électrique de la pièce à inspecter entre 0,5 MS/m et 60 MS/m, pour trois valeurs de fréquence électrique des courants circulant dans les bobines E et R. Plus précisément, chaque courbe est représentée avec sa régression linéaire pour illustrer sa vérification du critère C1. La première courbe C' est obtenue pour une fréquence électrique de 100 kHz et présente une erreur quadratique moyenne de 4,4% par rapport à sa régression linéaire. La deuxième courbe C" est obtenue pour une fréquence électrique de 200 kHz et présente une erreur quadratique moyenne de 1,2% par rapport à sa régression linéaire. Enfin, la troisième courbe C‴ est obtenue pour une fréquence électrique de 600 kHz et présente une erreur quadratique moyenne de 1,3% par rapport à sa régression linéaire.

On remarque qu'à partir de 200 kHz, l'erreur quadratique moyenne est très faible et varie peu. Cela signifie qu'il est optimal de travailler à hautes fréquences et qu'il est donc possible d'estimer la conductivité électrique de pièces de faible épaisseur.

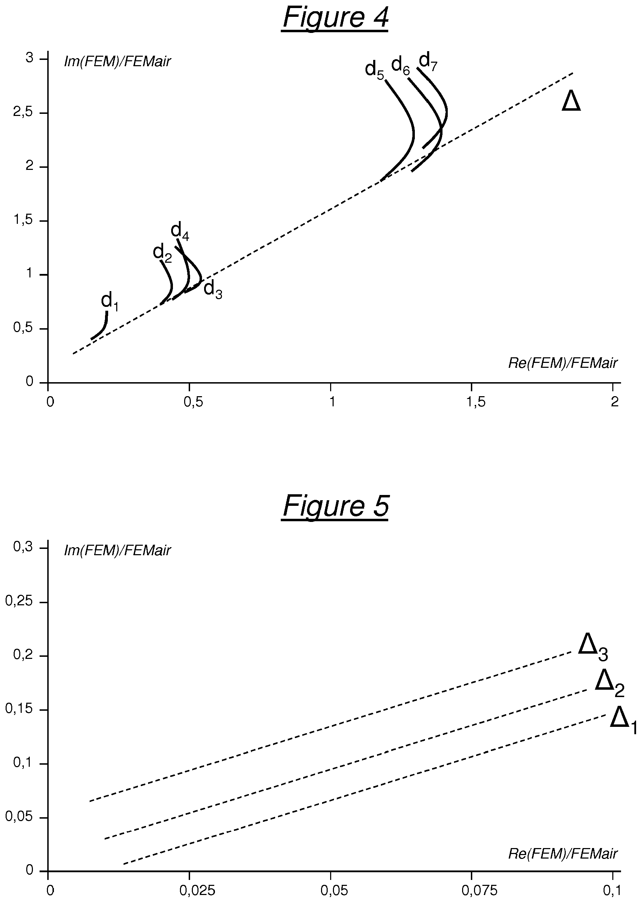

La figure 4 est un diagramme illustrant, dans le plan complexe normalisé, l'influence de la présence de défauts dans la pièce à inspecter, dans une plage de valeurs de conductivité électrique pour laquelle la tête de contrôle 10 a été optimisée conformément au critère C1. Sur cette figure, la droite Δ représentée en pointillés est la droite des variations complexes de la force électromotrice FEM en fonction des variations de conductivité électrique entre σ₁ et σ₂ (par exemple entre 0,5 MS/m et 60 MS/m) lorsque la pièce à inspecter ne présente pas de défaut.

Sur cette figure également, sept portions de courbes d₁ à d₇ représentent des variations de la force électromotrice FEM dues à la présence d'un défaut dans la pièce à inspecter pour sept matériaux de conductivités électriques différentes. Par exemple, le matériau donnant la portion de courbe d₁ est de l'aluminium 2024T3, celui donnant la portion de courbe d₂ est de l'inox 304L, celui donnant la portion de courbe d₃ est du titane TA6V et celui donnant la portion de courbe d₄ est de l'inconel 600 (marque déposée), ces quatre matériaux étant conducteurs et non magnétiques. Par exemple également, le matériau donnant la portion de courbe d₅ est de l'acier 32CVD13, celui donnant la portion de courbe d₆ est de l'acier 16NCD13 et celui donnant la portion de courbe d₇ est de l'inox 15-5-ph, ces trois matériaux ayant des conductivités plutôt faibles dans la plage de valeurs considérée et une perméabilité magnétique plus ou moins élevée.

On remarque que dans tous les cas, les portions de courbes significatives de la présence d'un défaut dans la pièce à inspecter partent de la droite Δ et s'en éloignent selon une direction principale qui se distingue très nettement de celle de la droite Δ, voire qui se rapproche même d'un angle droit par rapport à Δ. Cette propriété est très intéressante parce qu'elle permet de bien distinguer les variations complexes de la force électromotrice induite FEM dues à des variations de conductivité électrique de celles dues à la présence d'un défaut. Elle s'avère particulièrement appropriée dans le cas d'une inspection de soudure bimétallique afin de bien différencier les matériaux formant la soudure et les défauts présents dans la soudure.

Pour accentuer cette propriété, dans l'exemple de la figure 1, les critères sur lesquels est réalisée l'optimisation multidimensionnelle de la configuration géométrique des bobines peuvent en outre comporter de façon optionnelle un deuxième critère noté C2 de minimisation de la différence entre, d'une part, +/- π/2 et, d'autre part, le déphasage entre la variation complexe de la force électromotrice FEM due à la variation de conductivité électrique et/ou de perméabilité magnétique de la pièce à inspecter et la variation complexe de cette même force électromotrice FEM due à la présence d'un défaut à détecter dans la pièce à inspecter.

Le critère C2 peut alors être qualifié de critère de maximisation de la sensibilité de la tête de contrôle 10 aux défauts à détecter dans la pièce à inspecter tout en restant capable d'estimer la conductivité électrique, ou d'optimisation de la capacité de la tête de contrôle à discriminer défauts et variations électromagnétiques.

La figure 5 est un diagramme illustrant, dans le plan complexe normalisé, l'influence de la variation d'entrefer entre la tête de contrôle 10 et la pièce à inspecter, dans une plage de valeurs de conductivité électrique pour laquelle la tête de contrôle 10 a été optimisée conformément au critère C1. Sur cette figure, la première droite Δ₁ représentée en pointillés est la droite des variations complexes de la force électromotrice FEM en fonction des variations de conductivité électrique entre σ₁ et σ₂ (par exemple entre 0,5 MS/m et 60 MS/m) pour une première distance entre la tête de contrôle 10 et la pièce à inspecter. La deuxième droite Δ₂ représentée en pointillés est la droite des variations complexes de la force électromotrice FEM en fonction des variations de conductivité électrique entre σ₁ et σ₂ pour une deuxième distance entre la tête de contrôle 10 et la pièce à inspecter, cette deuxième distance étant supérieure à la première. La troisième droite Δ₃ représentée en pointillés est la droite des variations complexes de la force électromotrice FEM en fonction des variations de conductivité électrique entre σ₁ et σ₂ pour une troisième distance entre la tête de contrôle 10 et la pièce à inspecter, cette troisième distance étant supérieure à la deuxième.

On remarque que la variation d'entrefer engendre une translation de la droite des variations de la force électromotrice induite FEM due aux variations électromagnétiques. On peut en outre remarquer que cette translation se fait dans une direction principale qui se distingue très nettement de celle de la droite Δ, voire qui se rapproche même d'un angle droit par rapport à Δ. Cette propriété est également très intéressante parce qu'elle permet de bien distinguer les variations complexes de la force électromotrice induite FEM dues à des variations de conductivité électrique de celles dues à des variations d'entrefer. Du fait de la translation mesurable de la droite Δ en Δ₁, Δ₂ ou Δ₃ lorsque l'entrefer augmente, celui-ci peut être estimé. Or il s'agit d'un paramètre intéressant à connaître puisqu'il permet de mesurer l'épaisseur d'un revêtement par exemple.

Pour accentuer cette propriété, dans l'exemple de la figure 1, les critères sur lesquels est réalisée l'optimisation multidimensionnelle de la configuration géométrique des bobines peuvent en outre comporter de façon optionnelle un troisième critère noté C3 de minimisation de la différence entre, d'une part, +/- π/2 et, d'autre part, le déphasage entre la variation complexe de la force électromotrice FEM due à la variation de conductivité électrique et/ou de perméabilité magnétique de la pièce à inspecter et la variation complexe de cette même force électromotrice FEM due à une variation de distance entre la tête de contrôle et la pièce à inspecter, par exemple lorsque la tête de contrôle 10 est déplacée par rapport à la pièce.

Le critère C3 peut alors être qualifié de critère d'optimisation de la sensibilité de la tête de contrôle 10 aux variations d'entrefer tout en restant capable d'estimer la conductivité électrique, ou d'optimisation de la capacité de la tête de contrôle à discriminer variations d'entrefer et variations électromagnétiques.

Dans l'exemple de la figure 1, les trois critères C1, C2 et C3 sont utilisés lors de l'étape d'optimisation 102. Mais en variante et tout en restant dans le cadre de l'invention, seul le critère C1, ou seuls les critères C1 et C2, ou C1 et C3, pourrai(en)t être pris en compte.

On notera également que les variations de conductivité électriques dues aux variations d'entrefer sont facilement discriminables de celles due à la présence d'un défaut, les courbes obtenues en présence d'un défaut étant très caractéristiques et différentes des translations obtenues en augmentant ou diminuant l'entrefer.

L'étape d'optimisation 102, multidimensionnelle (par la présence de plusieurs paramètres finaux P_{f} à optimiser), a priori non linéaire, non contrainte et à critères multiples (par la prise en compte de C1, ou C1 et C2, ou C1 et C3, ou C1 et C2 et C3), peut être exécutée à l'aide de différents algorithmes connus. De façon pratique, en formalisant cette optimisation sous la forme d'une fonction multidimensionnelle, non linéaire et non contrainte à minimiser, l'algorithme de Nelder-Mead peut être mis en oeuvre à cette étape du procédé de fabrication. En variante, des algorithmes génétiques moins sensibles aux minima locaux peuvent être également mis en oeuvre.

Au cours de cette optimisation des paramètres finaux P_{f} pour répondre aux critères retenus, la configuration géométrique des bobines est avantageusement simulée pour évaluer la force électromotrice FEM et ses variations en fonction des propriétés électromagnétiques de la pièce à inspecter. La simulation se fait par exemple à l'aide du logiciel de simulation de contrôle non destructif connu sous le nom de CIVA (marque déposée), ou de tout autre logiciel de simulation notamment par éléments finis.

L'étape d'optimisation 102 est suivie d'une étape 104 de sélection des paramètres finaux P_{f} réalisant cette optimisation.

Enfin, au cours d'une étape finale 106, la tête de contrôle 10 est fabriquée en respectant la configuration géométrique des bobines définie par les paramètres initiaux Pᵢ et finaux P_{f}.

Comme illustré sur la figure 1 en partie inférieure, en coupe et en vues de dessus, la tête de contrôle 10 obtenue à l'issue de l'étape de fabrication 106 est par exemple réalisée concrètement sur un film flexible de polyimide de 150 µm d'épaisseur présentant quatre couches L₁, L₂, L₃ et L₄. L'intérêt d'un tel film fin et flexible est de permettre à la tête de contrôle 10 d'inspecter des pièces présentant des rayons de courbure importants en épousant leur forme.

L'épaisseur des deux bobines E et R est par exemple égale à l'épaisseur d'une piste de cuivre, soit pour cet exemple 9 µm. Pour la bobine à fonction d'émission E, le circuit d'émission dans lequel elle est intégrée ainsi que ses spires sont matérialisés par un fil de cuivre W_{E}. Pour la bobine à fonction de réception R, le circuit de réception dans lequel elle est intégrée ainsi que ses spires sont matérialisés par un fil de cuivre W_{R}.

Sur la couche inférieure L₁, le fil de cuivre W_{R} s'enroule dans un sens prédéterminé à partir du diamètre externe de la bobine R jusqu'à son diamètre interne, formant ainsi la bobine R. Il remonte ensuite le long de l'axe de la bobine R vers la couche L₂, à l'aide d'un via. Cette couche L₂ remplit simplement une fonction de routage du fil de cuivre W_{R} pour la formation du circuit de réception. Sur la couche L₃, le fil de cuivre W_{E} s'enroule dans un sens prédéterminé à partir du diamètre externe de la bobine E jusqu'à son diamètre interne, formant ainsi la bobine E. Il remonte ensuite le long de l'axe de la bobine E vers la couche supérieure L₄, à l'aide d'un via. Cette couche supérieure L₄ remplit simplement une fonction de routage du fil de cuivre W_{E} pour la formation du circuit d'émission.

Dans un cadre expérimental, les contraintes suivantes ont en outre été ajoutées :
- le nombre de spires des deux bobines doit être maximal pour augmenter la sensibilité et, pour des raisons technologiques, on fixe à 160 µm la résolution des spires (largeur piste de cuivre + largeur isolant entre spires),
- les diamètres internes et externes des bobines sont ajustés pour avoir un nombre entier de spires,
- un ruban adhésif de polyimide autocollant de 65 µm d'épaisseur est utilisé pour protéger la face de la tête de contrôle 10 en contact avec la pièce à inspecter,
- la fréquence électrique des courants circulant dans les bobines est initialement fixée à 1 MHz, ce paramètre étant également ajusté lors de l'étape d'optimisation 102.

De plus, dans la perspective que la tête de contrôle 10 puisse être utilisée pour détecter des zones de brûlure de fraisage lors d'usinages, il peut être imposé un diamètre externe maximal de bobine en cohérence avec le diamètre de la fraise. Ces zones de fragilité locale se repèrent effectivement par une variation de conductivité électrique lorsqu'une fraise reste trop longtemps à un même endroit.

Conformément au critère C1, et éventuellement aux critères C2 ou C3, on obtient par exemple à l'étape 104 la configuration géométrique suivante :
Bobine d'émission E :
   - diamètre interne = 9 mm,
   - diamètre externe = 10 mm,
   - hauteur = 0,01 mm,
   - nombre de spires = 4.
Bobine de réception R :
   - diamètre interne = 9 mm,
   - diamètre externe = 10 mm,
   - hauteur = 0,01 mm,
   - nombre de spires = 4.
Distance d entre les axes des deux bobines E et R : 5 mm.
Fréquence électrique optimisée : proche de 1 MHz.

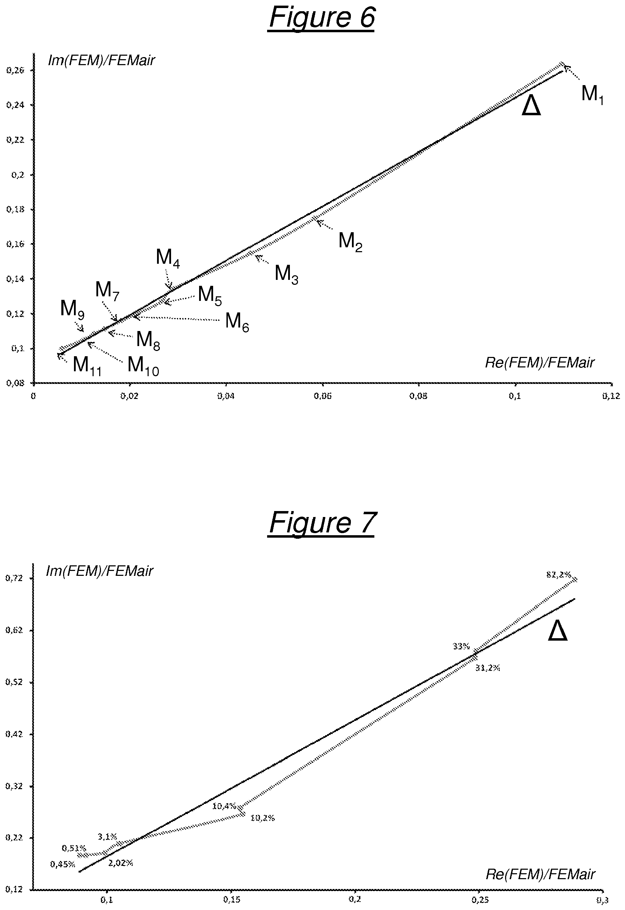

Pour cette configuration, la figure 6 illustre des résultats expérimentaux obtenus avec plusieurs matériaux de conductivités électriques connues différentes. Sur cette figure, la droite Δ représente la régression linéaire théorique des variations de la force électromotrice induite FEM résultant de ces variations de conductivités électriques. Les matériaux qui ont été utilisés sont : le titane LT31 de conductivité électrique égale à 0,6124 MS/m (référence M₁ sur la figure 6), le Manganin de conductivité électrique égale à 2,449 MS/m (référence M₂), le maillechort de conductivité électrique égale à 3,953 MS/m (référence M₃), le bronze de conductivité électrique égale à 8,704 MS/m (référence M₄), l'or nordique de conductivité électrique égale à 9,67 MS/m (référence M₅), le Messing de conductivité électrique égale à 14,35 MS/m (référence M₆), l'aluminium 2024/T3511 de conductivité électrique égale à 16,93 MS/m (référence M₇), l'aluminium 7175/T7351 de conductivité électrique égale à 22,8 MS/m (référence M₈), le AIMgSi F32 de conductivité électrique égale à 27,71 MS/m (référence M₉), l'aluminium 99,5 de conductivité électrique égale à 34,04 MS/m (référence M₁₀), le cuivre de conductivité électrique égale à 58,8 MS/m (référence M₁₁). Il est clair que toutes les valeurs de force électromotrice induite mesurées expérimentalement sont très proches de la droite Δ. La relation affine ainsi obtenue est très avantageuse puisqu'elle permet d'établir expérimentalement une relation simple entre la force électromotrice induite FEM mesurée et une valeur correspondante de conductivité électrique.

On peut également montrer expérimentalement qu'il est possible par la même méthode d'obtenir une relation affine simple entre les variations de force électromotrice induite (ou d'impédance) et des variations de perméabilité magnétique de la pièce à inspecter.

La figure 7 illustre ainsi des résultats expérimentaux obtenus avec plusieurs matériaux de taux de ferrite connus différents. Dans une moindre mesure, les valeurs de force électromotrice induite mesurées expérimentalement sont proches de la droite Δ, ce qui permet d'établir expérimentalement également une relation affine simple entre la force électromotrice induite FEM mesurée et un taux de ferrite correspondant. Or il est connu que le taux de ferrite est lié à la perméabilité magnétique, même si la relation n'est pas précisément connue. On sait par exemple que la perméabilité magnétique augmente quand le taux de ferrite augmente. La relation quasi affine entre les variations de perméabilité magnétique et celles de la force électromotrice induite FEM est donc établie par ces résultats expérimentaux.

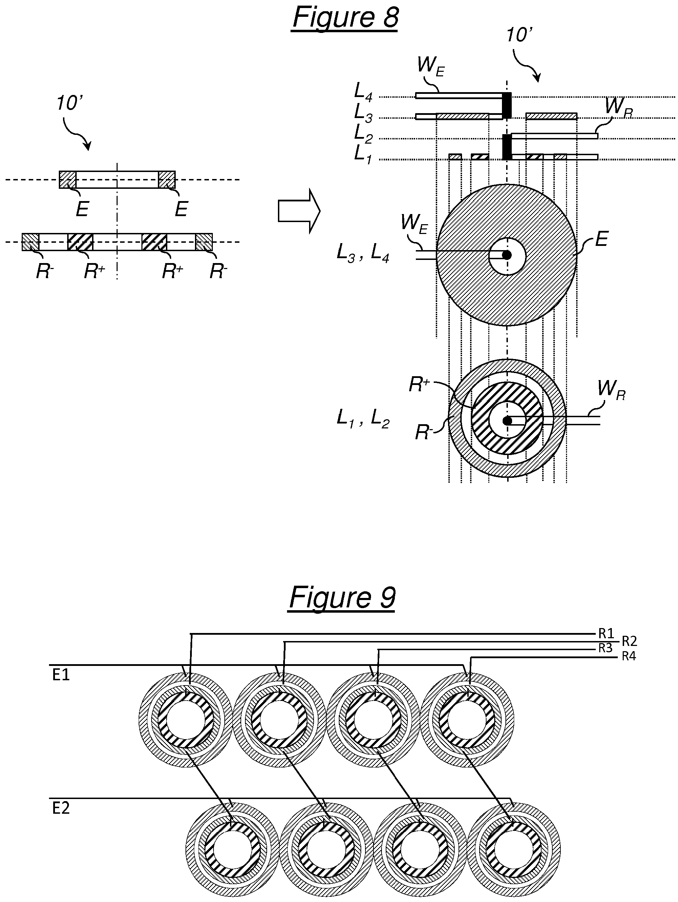

Le procédé de fabrication de la figure 1 a été présenté pour la conception d'une tête de contrôle 10 à deux bobines non coaxiales, dont une bobine à fonction d'émission et une bobine à fonction de réception. Mais il s'applique également par exemple pour la conception d'une tête de contrôle 10' à trois bobines coaxiales, dont une bobine à fonction d'émission et deux bobines à fonction de réception montées en mode différentiel. C'est l'objet de la figure 8 qui illustre schématiquement une telle configuration de tête de contrôle 10'.

L'intérêt de cette configuration est de présenter un faible couplage en l'absence de défaut et de permettre d'obtenir une réponse isotrope.

Au cours de la première étape d'initialisation 100, certains paramètres Pᵢ de la configuration géométrique des bobines de la tête de contrôle 10' sont imposés. Dans l'exemple de la figure 8 :
- le nombre de bobines de la tête de contrôle 10 souhaitée est fixé à trois, dont une bobine d'émission E et deux bobines de réception R⁺ et R⁻ montées en mode différentiel,
- les trois bobines E, R⁺ et R⁻ sont annulaires et coaxiales,
- les deux bobines de réception R⁺ et R⁻ sont en outre coplanaires.

Comme illustré sur la figure 8 en partie droite, en coupe et en vues de dessus, la tête de contrôle 10' obtenue à l'issue de l'étape de fabrication 106 est réalisée concrètement sur un film flexible de polyimide présentant quatre couches L₁, L₂, L₃ et L₄. L'épaisseur des trois bobines E, R⁺ et R⁻ est par exemple égale à l'épaisseur d'une piste de cuivre, soit pour cet exemple 9 µm. Pour la bobine à fonction d'émission E, le circuit d'émission dans lequel elle est intégrée ainsi que ses spires sont matérialisés par un fil de cuivre W_{E}. Pour les deux bobines à fonction de réception R⁺ et R⁻, le circuit de réception dans lequel elles sont montées en mode différentiel ainsi que leurs spires sont matérialisés par un fil de cuivre W_{R}.

Sur la couche inférieure L₁, le fil de cuivre W_{R} s'enroule dans un premier sens à partir du diamètre externe de la bobine R⁻ jusqu'à son diamètre interne, formant ainsi la bobine R⁻, puis s'enroule dans un second sens opposé au premier à partir du diamètre externe de la bobine R⁺ jusqu'à son diamètre interne, formant ainsi la bobine R⁺. Il remonte ensuite le long de l'axe commun des deux bobines R⁺ et R⁻ vers la couche L₂, à l'aide d'un via. Cette couche L₂ remplit simplement une fonction de routage du fil de cuivre W_{R} pour la formation du circuit de réception. Sur la couche L₃, le fil de cuivre W_{E} s'enroule dans un sens prédéterminé à partir du diamètre externe de la bobine E jusqu'à son diamètre interne, formant ainsi la bobine E. Il remonte ensuite le long de l'axe de la bobine E, qui est également commun aux deux bobines R⁺ et R⁻, vers la couche supérieure L₄, à l'aide d'un via. Cette couche supérieure L₄ remplit simplement une fonction de routage du fil de cuivre W_{E} pour la formation du circuit d'émission.

Conformément au critère C1, et éventuellement aux critères C2 ou C3, on obtient par exemple à l'étape 104 la configuration géométrique suivante :
Bobine d'émission E :
   - diamètre interne = 1,6 mm,
   - diamètre externe = 6,3 mm,
   - hauteur = 0,005 mm,
   - nombre de spires = 19.
Bobine de réception R⁺ :
   - diamètre interne = 1,613 mm,
   - diamètre externe = 3,5 mm,
   - hauteur = 0,005 mm,
   - nombre de spires = 7.
Bobine de réception R :
   - diamètre interne = 4,364 mm,
   - diamètre externe = 5,484 mm,
   - hauteur = 0,005 mm,
   - nombre de spires = 4.
Fréquence électrique optimisée : proche de 1 MHz.

Les paramètres Pᵢ de la configuration géométrique illustrée sur la figure 8 étant les mêmes que ceux de la configuration géométrique illustrée sur la figure 1 du brevet FR 2 985 027 B1, les deux têtes de contrôle optimisées obtenues ont été comparées du point de vue de l'erreur quadratique moyenne par rapport aux régressions linéaires de leurs courbes simulées des variations de la force électromotrice induite FEM en fonction des variations électromagnétiques de la pièce à inspecter. La tête de contrôle optimisée de la figure 8 présente une erreur quadratique moyenne de 0,23% alors que celle du brevet FR 2 985 027 B1 est à 3,78%. On mesure donc une nette amélioration de l'optimisation au vu du critère C1 de la présente invention.

D'une façon générale, le procédé de fabrication de la figure 1 s'applique pour la conception de têtes de contrôle présentant des configurations géométriques très diverses :
- configurations à une bobine d'émission et une ou deux bobines de réception, comme cela a été vu en référence aux figures 1 et 8, mais dans lesquelles les bobines peuvent être ordonnées de différentes façons sur les couches du support, coplanaires ou non, de différentes épaisseurs, etc.,
- configurations à deux bobines d'émission en mode différentiel et une bobine de réception, dans lesquelles les bobines peuvent également être ordonnées de différentes façons sur les couches du support, coplanaires ou non, de différentes épaisseurs, etc.,
- configurations à une ou deux bobines à fonction commune d'émission/réception, dans lesquelles les bobines peuvent être ordonnées de différentes façons sur les couches du support, coplanaires ou non, de différentes épaisseurs, etc.,
- configurations à nombre de bobines supérieur à trois.

D'une façon générale également, le procédé de fabrication décrit précédemment convient pour des têtes de contrôle dont les bobines sont de types aussi variés que filaires, imprimées ou gravées sur des supports souples (polyimides mono ou multicouches) ou rigides (polychlorobiphényles). Par ailleurs, les bobines émettrices et réceptrices n'ont pas nécessairement les mêmes caractéristiques géométriques. Elles peuvent en outre être de forme complexe, telle qu'une forme polygonale, ovale, à spires quelconques, etc.

Des composants électroniques tels que des amplificateurs, multiplexeurs, démodulateurs ou autres peuvent aussi être embarqués sur le support.

Un noyau de ferrite peut également être disposé au moins partiellement sur une ou plusieurs des bobines de la tête de contrôle ou même recouvrir l'ensemble des bobines. Plus généralement, un blindage magnétique peut être intégré à la tête de contrôle, tel qu'un noyau de ferrite ou un ruban magnétique flexible.

Par ailleurs comme illustré sur la figure 9, le motif élémentaire, illustré sur les figures 1 et 8 et obtenu par l'exécution du procédé de fabrication décrit précédemment, peut être répété pour la fabrication d'une tête de contrôle multi-éléments. De plus, dans une configuration à fonctions séparées d'émission et de réception comme c'est le cas de l'exemple des figures 1 et 8, un agencement matriciel avec connexion des éléments en lignes (E1, E2) et en colonnes (R1, R2, R3, R4) est possible selon le même procédé que celui mis en oeuvre et décrit dans le brevet français publié sous le numéro FR 2 904 693 B1. On peut alors envisager de décliner un capteur comportant une telle tête de contrôle en imageur bidimensionnel statique, la coaxialité des bobines de la figure 8 permettant en outre de réduire les zones d'ombre (i.e. zones à détection impossible de défauts).

En résumé, il apparaît clairement qu'un procédé de fabrication tel que celui décrit précédemment permet de concevoir des têtes de contrôle de capteurs de contrôle non destructif à courants de Foucault présentant les avantages suivants :
- grande sensibilité aux variations électromagnétiques dans la pièce à inspecter en rendant la réponse mesurée la plus rectiligne possible dans le plan complexe, tout en restant sensible aux défauts et aux variations d'entrefer,
- isotropie lorsqu'une coaxialité des bobines est imposée,
- réalisation facile sur film flexible de polyimide, en deux couches minimum pour les têtes de contrôle à fonctions séparées d'émission et réception, ou deux couches minimum pour les têtes de contrôle à fonction commune d'émission/réception,
- possibilité de connexion simple en matrice pour la réalisation d'imageurs avec un mode de connexion des bobines d'émission par ligne et des bobines de réception, l'image étant alors obtenue par un déplacement selon un axe du capteur,
- grâce au faible encombrement spatial de la configuration géométrique du motif élémentaire, possibilité de concevoir des capteurs de type imageur bidimensionnel statique minimisant les zones d'ombre, réalisables en film flexible de polyimide à couches multiples.

Les applications sont nombreuses et comprennent notamment :
- l'estimation de paramètres électromagnétiques de matériaux, même en présence de variations d'entrefer,
- la détection de défauts dans des matériaux non homogènes,
- l'estimation d'épaisseurs de revêtements par mesure d'entrefer dans des matériaux non homogènes,
- la détection de zones particulières dans des pièces où les paramètres électromagnétiques sont différents (zone de brûlure, torsion, ...),
- la détermination conjointe de la présence de défauts et des paramètres électromagnétiques d'une pièce inspectée,
- la détermination conjointe de la présence de l'épaisseur de revêtement et des paramètres électromagnétiques d'une pièce inspectée,
- etc.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Procédé de fabrication d'une tête de contrôle (10 ; 10') d'un capteur de contrôle non destructif à courants de Foucault, cette tête de contrôle comportant au moins une bobine (E, R ; E, R⁺, R⁻) dont au moins une bobine à fonction d'émission et au moins une bobine à fonction de réception, comportant les étapes suivantes :
- optimisation (102) d'une configuration géométrique (Pᵢ, P_{f}) de ladite au moins une bobine (E, R ; E, R⁺, R⁻) de la tête de contrôle (10 ; 10') sur la base d'au moins un critère d'optimisation prédéterminé,
- fabrication (106) de la tête de contrôle (10 ; 10') en respectant la configuration géométrique (Pᵢ, P_{f}) de ladite au moins une bobine (E, R ; E, R⁺, R⁻) réalisant cette optimisation (102),
**caractérisé en ce que** ledit au moins un critère d'optimisation prédéterminé comporte un critère (C1) d'optimisation du respect d'une relation de proportionnalité entre une variation de la partie imaginaire d'une grandeur électrique complexe induite dans ladite au moins une bobine à fonction de réception (R ; R⁺, R) et une variation de la partie réelle de cette grandeur électrique complexe, lorsque ces variations, formant une variation complexe de ladite grandeur électrique induite, sont dues à une variation de conductivité électrique et/ou de perméabilité magnétique d'une pièce à inspecter.

2. Procédé de fabrication d'une tête de contrôle (10 ; 10') selon la revendication 1, dans ledit au moins un critère d'optimisation prédéterminé comporte en outre un critère (C2, C3) de minimisation de la différence entre, d'une part, +/- π/2 et, d'autre part, le déphasage entre ladite variation complexe de la grandeur électrique due à ladite variation de conductivité électrique et/ou de perméabilité magnétique de la pièce à inspecter et une autre variation complexe de la même grandeur électrique due à la présence d'un défaut à détecter dans la pièce à inspecter et/ou à une variation de distance entre la tête de contrôle (10 ; 10') et la pièce à inspecter.

3. Procédé de fabrication d'une tête de contrôle (10 ; 10') selon la revendication 1 ou 2, dans lequel la grandeur électrique complexe induite est une force électromotrice ou une impédance.

4. Procédé de fabrication d'une tête de contrôle (10 ; 10') selon l'une quelconque des revendications 1 à 3, dans lequel la tête de contrôle (10 ; 10') comporte au moins deux bobines (E, R ; E, R⁺, R) et l'optimisation de la configuration géométrique de ces bobines comporte l'optimisation d'une disposition relative de ces bobines.

5. Procédé de fabrication d'une tête de contrôle (10 ; 10') selon l'une quelconque des revendications 1 à 4, dans lequel l'optimisation de la configuration géométrique de ladite au moins une bobine (E, R ; E, R⁺, R⁻) comporte l'optimisation de dimensions géométriques (P_{f}) de chaque bobine.

6. Procédé de fabrication d'une tête de contrôle (10 ; 10') selon l'une quelconque des revendications 1 à 5, dans lequel la configuration géométrique (Pᵢ, P_{f}) de ladite au moins une bobine (E, R ; E, R⁺, R⁻) de la tête de contrôle (10 ; 10') est préalablement initialisée (100) en imposant au moins l'un (Pᵢ) des éléments de l'ensemble constitué d'un nombre de bobines, d'une attribution de fonction d'émission et/ou de réception pour chaque bobine et de la coaxialité de toutes les bobines en cas de pluralité de bobines.

7. Procédé de fabrication d'une tête de contrôle (10 ; 10') selon l'une quelconque des revendications 1 à 6, dans lequel la configuration géométrique (Pᵢ, P_{f}) de ladite au moins une bobine (E, R ; E, R⁺, R⁻) de la tête de contrôle (10 ; 10') est optimisée (102) en faisant varier au moins l'un (P_{f}) des éléments de l'ensemble constitué de la disposition relatives des bobines en cas de pluralité de bobines, des diamètres internes et externes de chaque bobine, de leur nombre de spires, de leur épaisseur, d'une distance nominale par rapport à la pièce à inspecter et de la fréquence électrique des courants circulant dans chaque bobine.

8. Procédé de fabrication d'une tête de contrôle (10 ; 10') selon l'une quelconque des revendications 1 à 7, dans lequel l'optimisation (102) est réalisée sur la base :
- d'une simulation de la configuration géométrique (Pᵢ, P_{f}) de ladite au moins une bobine (E, R ; E, R⁺, R⁻) de la tête de contrôle (10 ; 10') permettant d'évaluer ladite grandeur électrique complexe induite et au moins sa variation complexe en fonction de la variation de conductivité électrique et/ou de perméabilité magnétique de la pièce à inspecter, et
- d'une optimisation, notamment une minimisation, multidimensionnelle non linéaire et non contrainte de type Nelder-Mead, appliquée sur le ou les critères d'optimisation (C1, C2, C3).

9. Procédé de fabrication d'une tête de contrôle (10') selon l'une quelconque des revendications 1 à 8, dans lequel la configuration géométrique (Pᵢ, P_{f}) de ladite au moins une bobine (E, R⁺, R) de la tête de contrôle (10') est préalablement initialisée en imposant les contraintes suivantes :
- le nombre de bobines de la tête de contrôle est fixé à trois, dont une bobine d'émission (E) et deux bobines de réception (R⁺, R) montées en mode différentiel,
- les trois bobines (E, R⁺, R⁻) de la tête de contrôle (10') sont annulaires et coaxiales,
- les deux bobines de réception (R⁺, R⁻) de la tête de contrôle (10') sont en outre coplanaires.

10. Procédé de fabrication d'une tête de contrôle (10) selon l'une quelconque des revendications 1 à 8, dans lequel la configuration géométrique (Pᵢ, P_{f}) de ladite au moins une bobine (E, R) de la tête de contrôle (10) est préalablement initialisée en imposant les contraintes suivantes :
- le nombre de bobines de la tête de contrôle est fixé à deux, dont une bobine d'émission (E) et une bobine de réception (R),
- ces deux bobines (E, R) sont annulaires, non coplanaires et non coaxiales.

## Patentansprüche

1. Verfahren zur Herstellung eines Prüfkopfes (10; 10') eines Sensors zur zerstörungsfreien Wirbelstromprüfung, wobei dieser Prüfkopf mindestens eine Spule (E, R; E, R⁺, R⁻) umfasst, von denen mindestens eine Spule eine Sendefunktion und mindestens eine Spule eine Empfangsfunktion hat, umfassend die folgenden Schritte:
- Optimierung (102) einer geometrischen Konfiguration (Pᵢ, P_{f}) der mindestens einen Spule (E, R; E, R⁺, R⁻) des Prüfkopfes (10; 10') auf der Grundlage mindestens eines vorgegebenen Optimierungskriteriums,
- Herstellung (106) des Prüfkopfs (10; 10') unter Einhaltung der geometrischen Konfiguration (Pᵢ, P_{f}) der mindestens einen Spule (E, R; E, R⁺, R⁻), die diese Optimierung (102) durchführt,
**dadurch gekennzeichnet, dass** das mindestens eine vorbestimmte Optimierungskriterium ein Kriterium (C1) zur Optimierung der Einhaltung einer Proportionalitätsbeziehung zwischen einer Abweichung des Imaginärteils einer komplexen elektrischen Größe, die in der mindestens einen Spule mit Empfangsfunktion (R; R⁺, R⁻) induziert wird, und einer Abweichung des Realteils dieser komplexen elektrischen Größe umfasst, wenn diese Abweichungen, die eine komplexe Abweichung der induzierten elektrischen Größe bilden, auf eine Abweichung der elektrischen Leitfähigkeit und/oder der magnetischen Permeabilität eines zu untersuchenden Teils zurückzuführen sind.

2. Verfahren zur Herstellung eines Prüfkopfes (10; 10') nach Anspruch 1, wobei das mindestens eine vorbestimmte Optimierungskriterium ferner ein Kriterium (C2, C3) zur Minimierung der Differenz zwischen einerseits +/- π/2 und andererseits der Phasenverschiebung zwischen der komplexen Änderung der elektrischen Größe aufgrund der Änderung der elektrischen Leitfähigkeit und/oder der magnetischen Permeabilität des zu untersuchenden Teils und einer anderen komplexen Änderung derselben elektrischen Größe aufgrund des Vorhandenseins eines zu erfassenden Fehlers in dem zu untersuchenden Teil und/oder einer Änderung des Abstands zwischen dem Prüfkopf (10; (10') und dem zu untersuchenden Teil.

3. Verfahren zur Herstellung eines Prüfkopfes (10; 10') nach Anspruch 1 oder 2, wobei die induzierte komplexe elektrische Größe eine elektromotorische Kraft oder eine Impedanz ist.

4. Verfahren zur Herstellung eines Prüfkopfes (10; 10') nach einem der Ansprüche 1 bis 3, wobei der Prüfkopf (10; 10') mindestens zwei Spulen (E, R; E, R⁺, R⁻) umfasst und die Optimierung der geometrischen Konfiguration dieser Spulen die Optimierung einer relativen Anordnung dieser Spulen umfasst.

5. Verfahren zur Herstellung eines Prüfkopfes (10; 10') nach einem der Ansprüche 1 bis 4, wobei die Optimierung der geometrischen Konfiguration der mindestens einen Spule (E, R; E, R⁺, R⁻) die Optimierung der geometrischen Abmessungen (P_{f}) jeder Spule umfasst.

6. Verfahren zur Herstellung eines Prüfkopfes (10; 10') nach einem der Ansprüche 1 bis 5, wobei die geometrische Konfiguration (Pᵢ, P_{f}) der mindestens einen Spule (E, R; E, R⁺, R⁻) des Prüfkopfes (10; 10') zuvor eingeleitet (100) wird, indem mindestens eines (Pᵢ) der Elemente aus dem Satz bestehend aus einer Anzahl von Spulen, einer Zuweisung einer Sende- und/oder Empfangsfunktion für jede Spule und der Koaxialität aller Spulen im Fall mehrerer Spulen vorgegeben wird.

7. Verfahren zur Herstellung eines Prüfkopfes (10; 10') nach einem der Ansprüche 1 bis 6, wobei die geometrische Konfiguration (Pᵢ, P_{f}) der mindestens einen Spule (E, R; E, R⁺, R⁻) des Prüfkopfes (10; 10') optimiert (102) wird, indem mindestens eines (P_{f}) der Elemente des Satzes, bestehend aus der relativen Anordnung der Spulen im Falle mehrerer Spulen, den Innen- und Außendurchmessern jeder Spule, der Anzahl ihrer Windungen, ihrer Dicke, einem Nennabstand von dem zu untersuchenden Teil und der elektrischen Frequenz der in jeder Spule fließenden Ströme, variiert wird.

8. Verfahren zur Herstellung eines Prüfkopfes (10; 10') nach einem der Ansprüche 1 bis 7, wobei die Optimierung (102) auf folgender Grundlage durchgeführt wird:
- einer Simulation der geometrischen Konfiguration (Pᵢ, P_{f}) der mindestens einen Spule (E, R; E, R⁺, R⁻) des Prüfkopfes (10; 10'), die es ermöglicht, die induzierte komplexe elektrische Größe und mindestens ihre komplexe Abweichung als Funktion der Abweichung der elektrischen Leitfähigkeit und/oder der magnetischen Permeabilität des zu untersuchenden Teils zu bewerten, und
- einer mehrdimensionalen, nichtlinearen und nicht beschränkten Optimierung, insbesondere einer Minimierung, vom Typ Nelder-Mead, die auf das oder die Optimierungskriterien (C1, C2, C3) angewendet wird.

9. Verfahren zur Herstellung eines Prüfkopfes (10') nach einem der Ansprüche 1 bis 8, wobei die geometrische Konfiguration (Pᵢ, P_{f}) der mindestens einen Spule (E, R⁺, R⁻) des Prüfkopfes (10') vorab initialisiert wird, indem die folgenden Beschränkungen vorgegeben werden:
- die Anzahl der Spulen des Prüfkopfes wird auf drei festgelegt, darunter eine Sendespule (E) und zwei Empfangsspulen (R⁺, R⁻), die im Differenzialmodus geschaltet sind,
- die drei Spulen (E, R⁺, R⁻) des Prüfkopfes (10') sind ringförmig und koaxial,
- die beiden Empfangsspulen (R⁺, R⁻) des Prüfkopfes (10') sind ferner komplanar.

10. Verfahren zur Herstellung eines Prüfkopfes (10) nach einem der Ansprüche 1 bis 8, wobei die geometrische Konfiguration (Pᵢ, P_{f}) der mindestens einen Spule (E, R) des Prüfkopfes (10) vorab initialisiert wird, indem die folgenden Beschränkungen vorgegeben werden:
- die Anzahl der Spulen des Prüfkopfes wird auf zwei festgelegt, darunter eine Sendespule (E) und eine Empfangsspule (R),
- diese beiden Spulen (E, R) sind ringförmig, nicht komplanar und nicht koaxial.

## Claims

1. A method for manufacturing a testing head (10) of a non-destructive testing sensor based on eddy currents, this testing head comprising at least one coil (E, R; E, R⁺, R⁻), at least one of which has a transmitting function and at least one of which has a receiving function, comprising the following steps:
- optimising (102) a geometric design (Pᵢ, P_{f}) of said at least one coil (E, R; E, R⁺, R⁻) of the testing head (10; 10') on the basis of at least one predetermined optimisation criterion,
- manufacturing (106) the testing head (10; 10') in accordance with the geometric design (Pᵢ, P_{f}) of said at least one coil (E, R; E, R⁺, R⁻) that carries out this optimisation (102),
**characterised in that** said at least one predetermined optimisation criterion comprises a criterion (C1) for optimising compliance with a relationship of proportionality between a variation in the imaginary part of a complex electrical quantity induced in said at least one coil with a receiving function (R; R⁺, R⁻) and a variation in the real part of this complex electrical quantity, when these variations, forming a complex variation in said induced electrical quantity, are due to a variation in the electrical conductivity and/or magnetic permeability of a part to be inspected.

2. The method for manufacturing a testing head (10 ; 10') according to claim 1, wherein said at least one predetermined optimisation criterion further comprises a criterion (C2, C3) for minimising the difference between, on the one hand, +/- π/2 and, on the other hand, the phase shift between said complex variation in the electrical quantity due to said variation in electrical conductivity and/or magnetic permeability of the part to be inspected and another complex variation in the same electrical quantity due to the presence of a defect to be detected in the part to be inspected and/or to a variation in distance between the testing head (10 ; 10') and the part to be inspected.

3. The method for manufacturing a testing head (10; 10') according to claim 1 or 2, wherein the complex electrical quantity induced is an electromotive force or an impedance.

4. The method for manufacturing a testing head (10; 10') according to any of claims 1 to 3, wherein the testing head (10; 10') comprises at least two coils (E, R; E, R⁺, R⁻) and optimising the geometric design of these coils comprises optimising a relative arrangement of these coils.

5. The method for manufacturing a testing head (10; 10') according to any of claims 1 to 4, wherein the optimisation of the geometric design of said at least one coil (E, R; E, R⁺, R⁻) comprises the optimisation of geometrical dimensions (P_{f}) of each coil.

6. The method for manufacturing a testing head (10; 10') according to any of claims 1 to 5, wherein the geometric design (Pᵢ, P_{f}) of said at least one coil (E, R; E, R^{+,} R⁻) of the testing head (10; 10') is initialised beforehand (100) by imposing at least one (Pᵢ) of the elements of the set consisting of a number of coils, an allocation of transmission and/or reception function for each coil and the coaxiality of all the coils in the case of a plurality of coils.

7. The method for manufacturing a testing head (10; 10') according to any of claims 1 to 6, wherein the geometric design (Pᵢ, P_{f}) of said at least one coil (E, R; E, R⁺, R⁻) of the testing head (10 ; 10') is optimised (102) by varying at least one of the elements (P_{f}) of the set consisting of the relative arrangement of the coils in the case of a plurality of coils, the internal and external diameters of each coil, their number of turns, their thickness, a nominal distance from the part to be inspected and the electrical frequency of the currents flowing in each coil.

8. The method for manufacturing a testing head (10; 10') according to any of claims 1 to 7, wherein the optimisation (102) is carried out on the basis of:
- a simulation for the geometric design (Pᵢ, P_{f}) of said at least one coil (E, R; E, R⁺, R⁻) of the testing head (10; 10') making it possible to evaluate said induced complex electrical quantity and at least its complex variation as a function of the variation in electrical conductivity and/or magnetic permeability of the part to be inspected, and
- a non-linear, unconstrained multidimensional optimisation, in particular minimisation, of the Nelder-Mead type, applied to the optimisation criterion or criteria (C1, C2, C3).

9. The method for manufacturing a testing head (10') according to any of claims 1 to 8, wherein the geometric design (Pᵢ, P_{f}) of said at least one coil (E, R⁺, R⁻) of the testing head (10') is initialised beforehand by imposing the following constraints:
- the number of coils in the testing head is set at three, including a transmitting coil (E) and two receiving coils (R⁺, R⁻) mounted in differential mode,
- the three coils (E, R⁺, R⁻) of the testing head (10') are annular and coaxial,
- the two receiving coils (R⁺, R⁻) of the testing head (10') are also coplanar.

10. The method for manufacturing a testing head (10) according to any of claims 1 to 8, wherein the geometric design (Pᵢ, P_{f}) of said at least one coil (E, R) of the testing head (10) is initialised beforehand by imposing the following constraints:
- the number of coils in the testing head is fixed at two, including a transmitting coil (E) and a receiving coil (R),
these two coils (E, R) are annular, non-coplanar and non-coaxial.
